# EUROPEAN PATENT SPECIFICATION

(11) **EP 0 345 018 B1**
(45) Date of publication and mention of the grant of the patent: **10.02.1993**
(21) Application number: 89305437.9
(22) Date of filing: 30.05.1989
(51) Int. Cl.: G03G 15/00, G03G 13/00

(54) **Image forming device and image forming process**
Bilderzeugungsvorrichtung und Bilderzeugungsverfahren
Dispositif et procédé pour la formation d'images

(30) Priority: 30.05.1988 JP 131930/88
(43) Date of publication of application: 06.12.1989
(73) Proprietor: FUJITSU LIMITED, Kawasaki-shi, Kanagawa 211 (JP)
(72) Inventor: Hayashida, Nobuyuki, Hachioji-shi Tokyo 193 (JP)
(74) Representative: Stebbing, Timothy Charles

(56) References cited:
- DD-A- 2 005 634
- US-A- 3 647 206
- US-A- 4 382 674

## Description

This invention relates to an image forming device and process for forming an image on a sheet materials, and, more particularly, relates to an image printing device suitable for use as a copying machine, or a printer for use in a computer, a facsimile machine or the like.

In a previously-proposed printing machine sheet material such as paper, film or the like, known as a "cut sheet" is generally used for printing an image thereon.

Generally speaking, in such a proposed image forming device, the size of the sheet to be printed is designated prior to the printing operation, and the timing of the start of printing on the surface of the sheet is controlled by the designated size of the cut sheet to be printed. Accordingly, in such a proposed image forming device, the printing operation can be started from a desired position on the sheet and at a predetermined margin from the front end of the sheet.

Further when the printing operation is completed, the last printed line is provided at a predetermined margin from the rear end of the cut sheet, and thus cut sheets having a predetermined designated size are printed inside an intended area of the cut sheets. If, however, a sheet having a smaller size than the previously designated size thereof is erroneously supplied to the image forming device, the printing operation would be carried out as for the cut sheets having the previously designated size, and thus it is possible that the image transfering voltage is directly applied to the surface of a photosensitive drum, i.e., is not insulated therefrom by the cut sheet. If the image transfering voltage is directly applied to the surface of a photosensitive drum, the durability of the photosensitive drum will be rapidly lowered and, further, the portion fouled by the toner will appear on the surface of the drum when a charging operation for transferring an image is carried out.

Furthermore, this phenomenon causes an excessive consumption of the toner and, if such a condition occurs frequently, the box for storing the used toner must be frequently exchanged for an empty box.

Accordingly, it is desirable to provide an image forming device, such as an image printer or the like, in which the continuation of an image printing operation, after the cut sheet has passed through, is effectively prevented even if cut sheets having a shorter longitudinal length than that of the cut sheet size previously designated are erroneously supplied to the image forming device.

US-A-4 382 674 discloses an image forming device having the features of the preamble of accompanying claim 1. In this device, the longitudinal dimension (size) of a sheet to be printed is determined to start and stop the printing operation so that only an image of corresponding longitudinal dimension is printed. The longitudinal dimension is detected based on which of a predetermined set of paper cassettes is used to supply the sheet.

According to a first aspect of the present invention, there is provided an image forming device which comprises:-
a printing means for performing a printing operation on a sheet, including forming an image on an image carrying means and transferring the image from the image carrying means to the sheet; and
a carrying means for carrying the sheet to said printing means along a carrying path for said sheet; characterised by:-
a detecting means for detecting the front end of said sheet and provided is said carrying path;
a means for starting said printing operation when the front end of said sheet is detected by said detecting means;
a detecting means for detecting the rear end of said sheet and provided on said carrying path; and
a means for stopping said printing operation when the rear end of said sheet is detected by said detecting means.

According to a second aspect of the present invention, there is provided a method of forming an image on a sheet utilizing an image forming device comprising a printing means for printing an image on a sheet, a carrying means for carrying the sheet to said printing means along a carrying path for said sheet, a detecting means for detecting the front end of said sheet and provided in said carrying path, a means for starting a printing operation on said sheet when the front end of said sheet is detected by said detecting means, a detecting means for detecting the rear end of said sheet and provided in said carrying path and a means for stopping the printing operation on said sheet when the rear end of said sheet is detected by said detecting means, said printing .means comprising an endless image carrying means and an image writing device for forming a latent image on the surface of said image carrying means, a developing device for developing said latent image on the surface thereof, an image transfer device for transferring the developed image on said surface thereof to a sheet, a discharging device for eliminating the charge on said surface thereof, and a precharging device for precharging the surface thereof at a predetermined static voltage, those elements being arranged in this order along the surface of said endless image carrying means in a moving direction thereof, wherein said printing operation is controlled in such a way that when said detector detects the front end of said sheet, the printing operation is started from the intended position on said sheet by sequentially activating said discharging device, said precharging device, said developing device, said image writing device and said image transfer device in this order, and at predetermined intervals, respectively, and when said detector detects the rear end of said sheet the printing operation is stopped at a predetermined intended position on said sheet and does not continue after the rear end of the sheet has passed through the printing mechanism, by sequentially deactivating said image writing device, said image transfer device, said developing device, said precharging device, and said discharging device in this order and at predetermined intervals.

Reference is made, by way of example, to the accompanying drawings, in which:-
Fig. 1 is a block diagram for use in explaining a basic principle of the present invention;
Fig. 2 is a cross-sectional view of the internal construction of one example of a printer embodying the present invention;
Fig. 3 is a diagram showing the control system in an embodiment of the present invention;
Fig. 4 is a flow chart for use in explaining a printing operation in an embodiment of the present invention;
Fig. 5 is a timing chart for use in explaining the sequence of the operation of each element in a device embodying the present invention; and
Fig. 6 is a cross sectional view of another printer embodying the present invention.

As explained above, an image forming device embodying the present invention can constitute an image printing device used for a copying machine, or a printer used in a computer, a facsimile or the like. Accordingly, the printing means used in an embodiment of the present invention is not restricted to a specific printing means, but any kind of printing means, for example an electrostatic recording system, an electrophotographic recording system, and a thermal recording system or the like, can be used. Nevertheless, in the specific embodiment of this invention explained below, preferably the electrophotographic recording system is used.

Further, in an embodiment of the present invention, the image forming device is designed to use a cut sheet, such as paper, film or the like, as the material on which an image is printed.

Further, in an embodiment of the present invention, to prevent a mis-printing in which the printing operation is continued after the cut sheet has passed through the image forming device, which is usually caused by erroneously using a sheet having a shorter length in the longitudinal direction thereof than that of the sheet previously designated in the image forming device before starting the printing operation, the front sheet end detecting means and the rear sheet end detecting means are provided on the path of the sheet to be printed and the printing operation on the cut sheet can be controlled by signals output from the detectors when each detector detects the front end of the cut sheet or the rear end of the cut sheet, respectively.

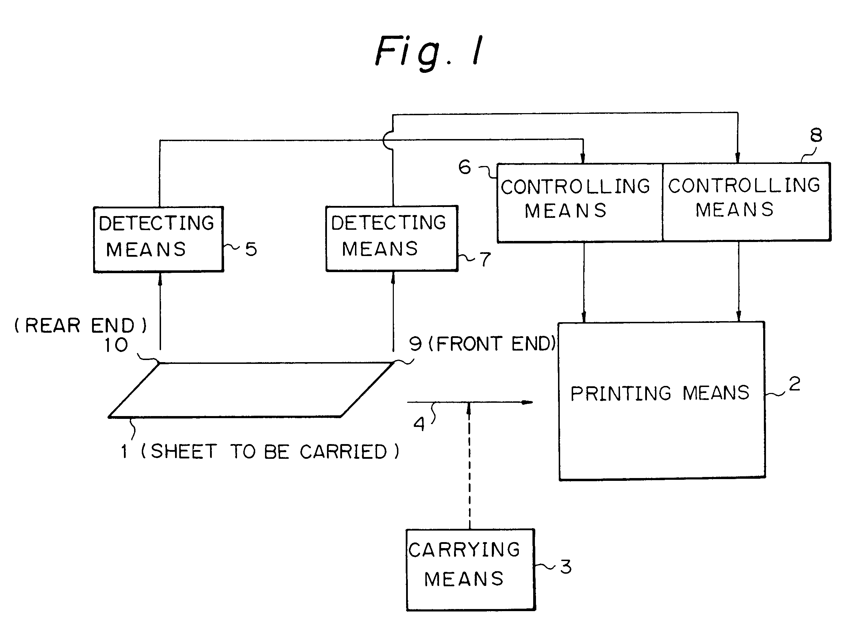

Namely, as shown in Fig. 1, when the front end 9 of the cut sheet 1 is detected by the detector 5, the controlling means 6 controls the printing means 2 to start the printing operation on the sheet 1 from the desired position on the cut sheet 1 at a predetermined margin from the front end of the cut sheet 1, and when the rear end 10 of the sheet 1 is detected by the detector 7, the controlling means 8 controls the printing means 2 to step the printing operation on the cut sheet 1 to prevent a continuation of the printing operation after the cut sheet 1 has passed through the image forming device.

In an embodiment of the present invention, the printing means comprises an endless image carrying member which consists of a rotatable cylindrical body having an outer surface covered with an image recording material on which the image is recorded and held, either as a latent image or an actual image.

In an embodiment of the present invention, the image carrying member is made of a conductive material and the image is recorded thereon by using an electrode separately provided thereon, or the image carrying member is made of a metallic substance having a surface covered with a photosensitive material on which the image can be recorded by, for example, a laser.

The preferred embodiment of this invention will now be explained with reference to the attached drawings.

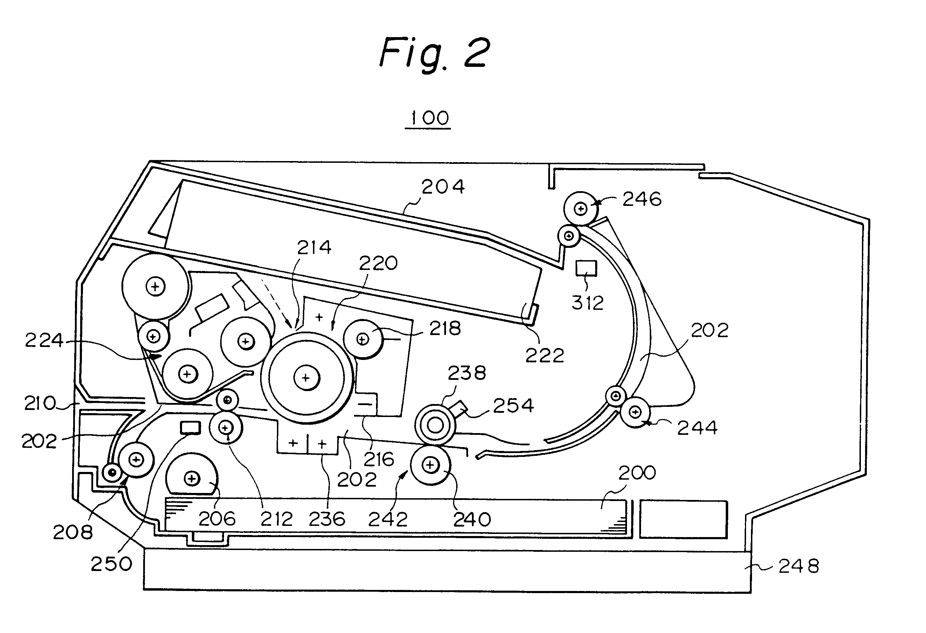

Figure 2 shows a cross sectional view of the internal construction of a laser printer 100 embodying the present invention.

In Fig. 2, the cut sheet material 200, for example, paper, film or the like, is stacked on the inner bottom portion of the laser printer 100, or is contained in a cassette or the like, and the cut sheets 200 are picked up by the pick-up roller 206 one by one from the top of the pile of cut sheet held in the cassette and fed to a cut sheet carrying passage 202 having curved portions, i.e., the passage 202 has an S-like configuration, and the cut sheets 200 are finally fed to an outlet sheet tray 204, i.e., a stacker, provided at the upper portion of the laser printer 100.

The cut sheets 200 picked up by the pick-up roller 206 are fed into the sheet carrying passage 202 by a feeding roller 208. Note, the cut sheets 200 may be inserted into the sheet carrying passage 202 through a cut sheet inlet 210 provided on the side wall of the laser printer 100, as shown on the left hand side of Figure 2.

In the sheet carrying passage 202, a roller 212 is provided downstream of the roller 208 and the cut-sheet inlet 210, and thus cut sheets 200 picked up by the pick up roller 206 or fed from the cut-sheet inlet 210 can be carried to the lower portion of a photosensitive drum 214 through the sheet carrying passage 202.

The photosensitive drum 214 is a main element of the printing means of this invention and corresponds to the endless image carrying member of the printing means.

The photosensitive drum 214 consists of a cylindrical member having a photosensitive film material covering the outer surface thereof, and the associated devices such as an image writing device, a developing device, an image transfer device, a discharging device, and a precharging device, are arranged in close contact with the surface of and encircling the drum 214.

The surface of the photosensitive drum 214 is discharged by the discharging device 216 after the toner is transferred, then cleaned by the cleaner 218, and again charged by the precharging device 220 after the cleaning operation. At this stage, the surface of the drum is given an electrical potential of, for example, -600 V by the precharging device 220.

Further, after the precharging operation is carried out, an image is formed on the surface of the drum 214 in such a way that a laser beam emitted from a drum writing unit 222 and scanned along the axial direction of the drum 214, is made incident on the surface of the drum 214 to form a latent image thereon, the latent image is developed by the developing device 224 to form a toner image, and the thus developed toner image is transferred to a cut sheet 200 by the image transfer device 236.

When the laser beam is made incident on the surface of the photosensitive drum 214, the electric potential of the point of the surface thereof on which the laser beam is incident will become 0 V, i.e., the natural characteristic of the photosensitive material covering the surface of the drum 214.

Namely, the toner per se is generally charged at a minus voltage (V) of, for example, abont -500 V, and when the drum 214 is rotated and a point at which the electrical potential is 0 V is shifted to the developing device 224, the toner is predominantly attached to that point to form an image on the drum. Further, when the image formed on the surface of the drum 214 is printed on the cut sheet 200 by transferring the toner image to the surface of the sheet 200, a transfer charge having an electrical potential of about +5 kV is applied to the surface of the cut sheet 200 in transfer device 236, to transfer the toner from the drum 214 to the surface of the cut sheet 200. The cut sheet 200 having the toner image printed thereon is then carried to a toner fixing device 242 consisting of a heat roller 238 including a halogen lamp therein and a pressure roller 240, and after the printed toner image is fixed on the cut sheet 200 at the toner fixing device 242, the cut sheet 200 is carried to the outlet sheet tray 204 through feed rollers 244 and 246.

Therefore, as understood from the above, after the image transfering operation is finished the cut sheet 200 is subjected to a thermal treatment by the heating roller 238, at a temperature of, for example, 190°C, to fix the toner image on the cut sheet 200.

In this embodiment of the present invention, a section 248 containing a control mechanism 308 for controlling most of the devices in this printer, is provided on the bottom surface of the laser printer 100, and further, a detector 250 for detecting the front end and the rear end of the cut sheet 200 carried in the sheet carrying passage 202 is provided upstream of the roller 212.

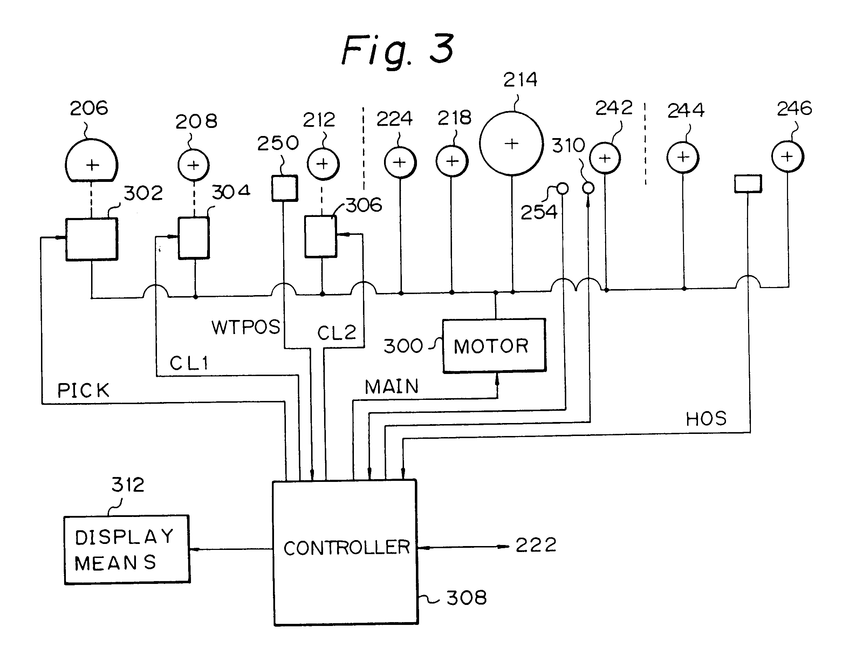

As shown in Figure 3, the detected signal output from the detector 250 is applied to the controller 308, which controls the mechanism of the printer in such a way that when the detector 250 detects the front end of a cut sheet 200, the printing operation on the cut sheet 200 is started, and when the detector 250 detects the rear end of the cut sheet 200, the printing operation on the cut sheet 200 is stopped.

Further, a sensor 254 is provided for detecting the temperature of the heat roller 238, and the control of the temperature of the heat roller 238 is carried out in accordance with signal output from the sensor 254.

Figure 3, explains the control system of the laser printer embodying the present invention, and as apparent from Figure 3, the drive forces required for the operation of the respective devices are provided by a motor 300. Further, each roller 206, 208, and 212 is provided with a clutch 302, 304, and 306, respectively, and these rollers, clutches, and the motor 300 are controlled by the controller 308 in the controller containing section 248. The flow of current to the halogen lamp 310 contained inside the heat roller 238 is also controlled by the controller 308.

In this embodiment, a display means 312 showing the time when the devices to be consumed such as a drum unit including the photosensitive drum 214, the developing device 224, the image transfer device 236, and the fixing device 242, should be exchanged, is controlled by the controller 308.

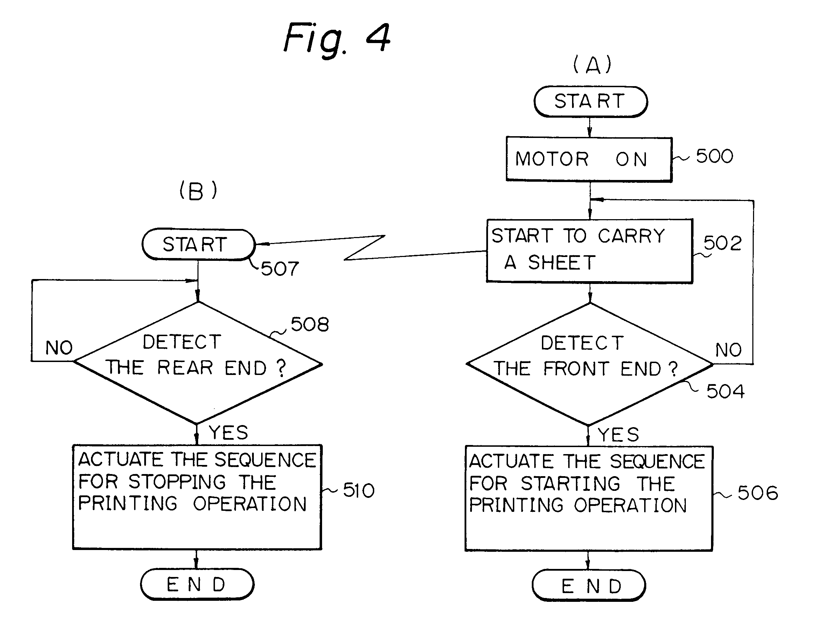

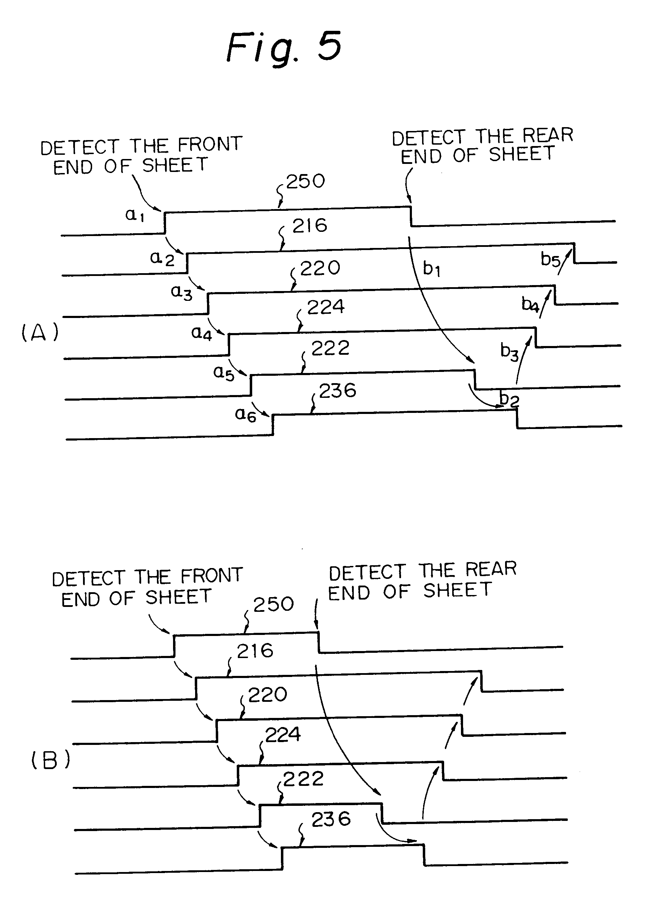

Hereafter, the sequence of the operation of each device used in this embodiment is explained with reference to Figs. 4 and 5.

Figure 4 is a flow chart of the process for controlling the printing operation of this embodiment, and Figure 5 is a timing chart of the operation of the respective devices in this embodiment.

In Figure 5, the timing chart for cut sheet 200 having predetermined designated size, which is determined in accordance with the size of the sheet containing cassette inserted in the laser printer 100, is explained with reference to Figure 5A, and the timing chart for a cut sheet 200 having a size shorter than the predetermined designated size is explained with reference to Figure 5B.

Referring to the flow chart (A) in Figure 4, when the motor 300 is started (step 500), a cut sheet 200 having the designated size is picked up by the pickup roller 206 and carried into the sheet carrying passage 202 by the feeding roller 208 (step 502). When the front end of the cut sheet 200 is detected by the detector 250 (step 504) a signal is output from the detector 250 to the controller 308, which then starts the printing operation by driving the devices involved in this printing operation in a predetermined sequence (step 506).

Namely, the printing operation of this embodiment is carried out in such a way that, when the front end of the sheet 200 is detected, the printing operation is started from the intended position on the cut sheet 200 by sequentially actuating the discharging device 216, the precharging device 220, the developing device 224, the image writing device 222, and the image transfer device 236, in this order and at predetermined intervals. The timing chart for this sequence is shown in Figure 5A by arrows a₁ to a₆. If all of the images to be printed are transferred to the cut sheet 200 before the detection of the rear end of the cut sheet by the detector 250, the printing operation is stopped at that time.

The flow chart for the detection of the rear end of the cut sheet 200 is explained in the flow chart (B) in Figure 4. Note, the flow chart (B) is started simultaneously with step 502 in the flow chart (A).

When the detector 250 detects the rear end of the cut sheet 200 (step 508) a signal is output from the detector 250 to the controller 308, which then stops the printing operation by deactivating the devices involved in this printing operation, in a predetermined sequence (step 510).

Namely, the print stopping operation of this embodiment is carried out in such a way that when the rear end of the cut sheet 200 is detected, the printing operation is stopped at the predetermined intended position on the sheet and is not continued after the cut sheet 200 has passed through the printing mechanism, by sequentially deactivating the image writing device 222, the image transfer device 236, the developing device 224, the precharging device 220, and the discharging device 216 in this order and at predetermined intervals.

The timing chart for this sequence is shown in Figure 5A arrows b₁ to b₆. Accordingly, even if a cut sheet 200 having a size shorter than the predetermined cut sheet size is erroneously input to the laser printer, in this embodiment the print stopping operation will be actuated when the rear end of the cut sheet 200 is detected by the detector 250, as described above.

As shown in Figure 5, each device is activated and deactivated at a predetermined time delay from the device activated or deactivated immediately before the device concerned.

This time delay is determined on the basis of the image to be printed on an intended portion of the cut sheet 200, taking into consideration the operational characteristic of each device in this printing system, for example, the velocity of the cut sheet, the rotational surface speed of the drum or the place at which the image should be printed on the cut sheet.

In this embodiment of the present invention, the printing method using a scanning laser and the photosensitive drum with an electrophotographic recording system is explained, but the present invention is not limited thereto an another printing system such as an electrostatic recording system may be used.

Further, an LED array system can be utilized in an embodiment of the present invention instead of the scanning laser described above.

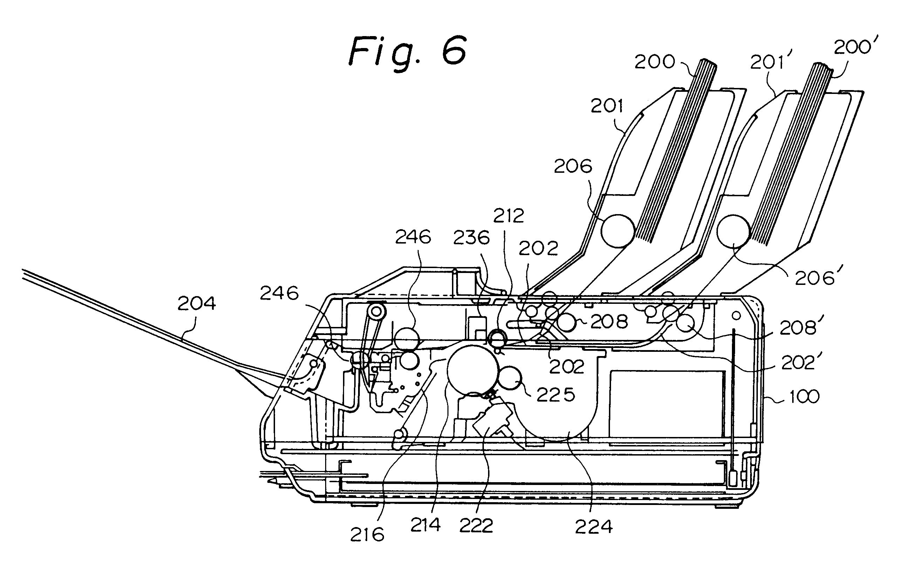

Another specific embodiment of the present invention will be described with reference to Figure 6 hereunder.

Figure 6 shows a cross sectional view of an internal construction of another printer embodying the present invention and the printer of this example is different form the previous example as shown in Figure 2 in such points such that this printer of this example has two separated cut sheet feeders 201 and 201′ containing cut sheets therein provided on the top surface of the printer 100 and further the image printing mechanism thereof is completely reversed compared with that of the printer shown in Figure 2.

However, the basic printing mechanism of this example is nearly the same as that of the printer shown in Figure 2 and therefore, the same parts of Figure 6 as provided in Figure 2 carry the same number as in Figure 2.

Note that a roller 225 in Figure 6 is a developing roller.

According to an embodiment of the present invention, even if a cut sheet having a size smaller than that previously designated is erroneously supplied to the image forming device, a continuation of the printing of the image after the cut sheet has passed through the printing mechanism, is effectively prevented.

Therefore, the drawbacks of the previously-proposed printing method, such as a lowering of the durability of the photosensitive drum when the transfer voltage is directly applied to the surface thereof, and the fouling thereof with toner when the charging operation for transferring the image is carried out, can be eliminated, thereby preventing an excessive consumption of toner.

## Claims

1. An image forming device which comprises:-
a printing means for performing a printing operation on a sheet, including forming an image on an image carrying means and transferring the image from the image carrying means to the sheet; and
a carrying means for carrying the sheet to said printing means along a carrying path for said sheet;
characterised by:-
a detecting means for detecting the front end of said sheet and provided in said carrying path;
a means for starting said printing operation when the front end of said sheet is detected by said detecting means;
a detecting means for detecting the rear end of said sheet and provided on said carrying path; and
a means for stopping said printing operation when the rear end of said sheet is detected by said detecting means.

2. An image forming device according to claim 1, wherein said printing means comprises an electrostatic recording system.

3. An image forming device according to claim 1, wherein said printing means comprises an electrophotographic recording system.

4. An image forming device according to claim 1 or 2, wherein said printing means comprises an endless image carrying means and further comprises an image writing device for forming a latent image on a surface of said image carrying means, a developing device for developing said latent image on the surface of said image carrying means, an image transfer device for transferring the image developed on the surface of said image carrying means to a sheet, a discharge device for eliminating a charge on the surface of said image carrying means and a precharging device for precharging the surface of said image carrying means to a predetermined static voltage, these elements being arranged in this order along the surface of said endless image carrying means in the moving direction thereof.

5. An image forming device according to claim 4, wherein said endless image carrying means consists of a cylindrical body having a photosensitive material covering the surface thereof.

6. An image forming device according to claim 4 or 5, wherein said image writing device comprises a LED array, which emits a light beam.

7. An image forming device according to claim 4, 5 or 6, wherein a control unit for controlling said endless image carrying means, activates said image writing device, said developing device, said image transfer device, said discharging device and said precharging device in a predetermined sequence when said detecting device detects the front end of a sheet, and deactivates those devices in a predetermined sequence when said detecting device detects the rear end of the sheet.

8. A method of forming an image on a sheet utilizing an image forming device comprising a printing means for printing an image on a sheet, a carrying means for carrying the sheet to said printing means along a carrying path for said sheet, a detecting means for detecting the front end of said sheet and provided in said carrying path, a means for starting a printing operation on said sheet when the front end of said sheet is detected by said detecting means, a detecting means for detecting the rear end of said sheet and provided in said carrying path and a means for stopping the printing operation on said sheet when the rear end of said sheet is detected by said detecting means, said printing means comprising an endless image carrying means and an image writing device for forming a latent image on the surface of said image carrying means, a developing device for developing said latent image on the surface thereof, an image transfer device for transferring the developed image on said surface thereof to a sheet, a discharging device for eliminating the charge on said surface thereof, and a precharging device for precharging the surface thereof at a predetermined static voltage, those elements being arranged in this order along the surface of said endless image carrying means in a moving direction thereof, wherein said printing operation is controlled in such a way that when said detector detects the front end of said sheet, the printing operation is started from the intended position on said sheet by sequentially activating said discharging device, said precharging device, said developing device, said image writing device and said image transfer device in this order, and at predetermined intervals, respectively, and when said detector detects the rear end of said sheet the printing operation is stopped at a predetermined intended position on said sheet and does not continue after the rear end of the sheet has passed through the printing mechanism, by sequentially deactivating said image writing device, said image transfer device, said developing device, said precharging device, and said discharging device in this order and at predetermined intervals.

## Patentansprüche

1. Bilderzeugungsvorrichtung, welche umfaßt:-
ein Druckermittel zum Ausführen eines Druckvorganges auf einem Blatt, umfassend das Erzeugen eines Bildes auf einem Bildtragemittel und das Übertragen des Bildes vom Bildtragemittel auf das Blatt; und
ein Transportmittel zum Transportieren des Blattes zum Druckermittel entlang eines Transportweges für das Blatt;
gekennzeichnet durch:-
ein im Transportweg vorgesehenes Erkennungsmittel zum Erkennen des vorderen Endes des Blattes;
ein Mittel zum Starten des Druckvorganges, wenn das vordere Ende des Blattes vom Erkennungsmittel erkannt wird;
ein im Transportweg vorgesehenes Erkennungsmittel zum Erkennen des hinteren Endes des Blattes; und
ein Mittel zum Stoppen des Druckvorganges, wenn das hintere Ende des Blattes vom Erkennungsmittel erkannt wird.

2. Bilderzeugungsvorrichtung nach Anspruch 1, worin das Druckermittel ein elektrostatisches Aufzeichnungsystem umfaßt.

3. Bilderzeugungsvorrichtung nach Anspruch 1, worin das Druckermittel ein elektrophotographisches Aufzeichnungsystem umfaßt.

4. Bilderzeugungsvorrichtung nach Anspruch 1 oder 2, worin das Druckermittel ein endloses Bildtragemittel umfaßt, und worin sie weiters umfaßt eine Bildschreibvorrichtung zum Erzeugen eines latenten Bildes auf einer Oberfläche des Bildtragemittels, eine Entwicklervorrichtung zum Entwickeln des latenten Bildes auf der Oberfläche des Bildtragemittels, eine Bildübertragungsvorrichtung zum Übertragen des auf der Oberfläche des Bildtragemittels entwickelten Bildes auf ein Blatt, eine Entladevorrichtung zum Beseitigen einer Ladung auf der Oberfläche des Bildtragemittels und eine Vor-Aufladevorrichtung zum Vor-Aufladen der Oberfläche des Bildtragemittels auf eine festgelegte, statische Spannung, wobei diese Elemente in dieser Reihenfolge entlang der Oberfläche des endlosen Bildtragemittels in dessen Bewegungsrichtung angeordnet sind.

5. Bilderzeugungsvorrichtung nach Anspruch 4, worin das endlose Bildtragemittel aus einem zylindrischen Körper besteht, der ein photoempfindliches Material besitzt, das dessen Oberfläche bedeckt.

6. Bilderzeugungsvorrichtung nach Anspruch 4 oder 5, worin die Bildschreibvorrichtung eine LED-Matrix umfaßt, welche einen Lichtstrahl emittiert.

7. Bilderzeugungsvorrichtung nach Anspruch 4, 5 oder 6, worin eine Steuereinheit zum Steuern des endlosen Bildtragemittels die Bildschreibvorrichtung, die Entwicklervorrichtung, die Bildübertragungsvorrichtung, die Entladevorrichtung und die Vor-Aufladevorrichtung in einer festgelegten Abfolge aktiviert, wenn die Erkennungsvorrichtung das vordere Ende eines Blattes erkennt, und diese Vorrichtungen in einer festgelegten Abfolge desaktiviert, wenn die Erkennungsvorrichtung das hintere Ende des Blattes erkennt.

8. Verfahren zum Erzeugen eines Bildes auf einem Blatt unter Verwendung einer bilderzeugenden Vorrichtung, umfassend ein Druckermittel zum Drucken eines Bildes auf einem Blatt, ein Transportmittel zum Transportieren des Blattes zum Druckermittel entlang eines Transportweges für das Blatt, ein im Transportweg vorgesehenes Erkennungsmittel zum Erkennen des vorderen Endes des Blattes, ein Mittel zum Starten eines Druckvorganges auf dem Blatt, wenn das vordere Ende des Blattes vom Erkennungsmittel erkannt wird, ein im Transportweg vorgesehenes Erkennungsmittel zum Erkennen des hinteren Endes des Blattes, und ein Mittel zum Stoppen des Druckvorganges auf dem Blatt, wenn das hintere Ende des Blattes vom Erkennungsmittel erkannt wird, wobei das Druckermittel umfaßt ein endloses Bildtragemittel und eine Bildschreibvorrichtung zum Erzeugen eines latenten Bildes auf der Oberfläche des Bildtragemittels, eine Entwicklervorrichtung zum Entwickeln des latenten Bildes auf dessen Oberfläche, eine Bildübertragungsvorrichtung zum Übertragen des auf dessen Oberfläche entwickelten Bildes auf ein Blatt, eine Entladevorrichtung zum Beseitigen der Ladung auf dessen Oberfläche, und eine Vor-Aufladevorrichtung zum Vor-Aufladen dessen Oberfläche auf eine festgelegte, statische Spannung, wobei diese Elemente in dieser Reihenfolge entlang der Oberfläche des endlosen, bildtragenden Mittels in dessen Bewegungsrichtung angeordnet sind, worin der Druckvorgang auf eine solche Weise gesteuert wird, daß, wenn der Detektor das vordere Ende des Blattes erkennt, der Druckvorgang von der beabsichtigten Position auf dem Blatt gestartet wird durch aufeinanderfolgendes Aktivieren der Entladevorrichtung, der Vor-Aufladevorrichtung, der Entwicklervorrichtung, der Bildschreibvorrichtung und der Bildübertragungsvorrichtung, in dieser Reihenfolge und zu jeweiligen festgelegten Intervallen, und wenn der Detektor das hintere Ende des Blattes erkennt, der Druckvorgang an einer festgelegten, beabsichtigten Position auf dem Blatt gestoppt wird und nicht fortfährt, nachdem das hintere Ende des Blattes den Druckmechanismus durchlaufen hat, durch aufeinanderfolgendes Desaktivieren der Bildschreibvorrichtung, der Bildübertragungsvorrichtung, der Entwicklervorrichtung, der Entladevorrichtung und der Vor-Aufladevorrichtung, in dieser Reihenfolge und zu festgelegten Intervallen.

## Revendications

1. Dispositif de formation d'image, qui comporte
un dispositif d'impression destiné à exécuter une opération d'impression sur une feuille, comprenant la formation d'une image sur un dispositif de support d'image et le report de l'image du dispositif de support d'image à la feuille, et
un dispositif de transport de la feuille au dispositif d'impression le long d'un trajet de transport de la feuille,
caractérisé par
un dispositif de détection de l'extrémité avant de la feuille, placé sur le trajet de transport,
un dispositif destiné à provoquer le début de l'opération d'impression lorsque l'extrémité avant de la feuille est détectée par le dispositif de détection,
un dispositif de détection de l'extrémité arrière de la feuille, placé sur le trajet de transport, et
un dispositif destiné à interrompre l'opération d'impression lorsque l'extrémité arrière de la feuille est détectée par le dispositif de détection.

2. Dispositif de formation d'image selon la revendication 1, dans lequel le dispositif d'impression comprend un système d'enregistrement électrostatique.

3. Dispositif de formation d'image selon la revendication 1, dans lequel le dispositif d'impression comprend un système d'enregistrement électrophotographique.

4. Dispositif de formation d'image selon la revendication 1 ou 2, dans lequel le dispositif d'impression comprend un dispositif sans fin de support d'image, et en outre un dispositif d'impression d'image destiné à former une image latente à la surface du dispositif de support d'image, un dispositif de développement de l'image latente à la surface du dispositif de support d'image, un dispositif de report de l'image développée à la surface du dispositif de support d'image à une feuille, un dispositif de décharge destiné à éliminer une charge de la surface du dispositif de support d'image, et un dispositif de charge préalable de la surface du dispositif de support d'image à une tension statique prédéterminée, ces éléments étant placés dans cet ordre le long de la surface du dispositif sans fin de support d'image dans son sens de déplacement.

5. Dispositif de formation d'image selon la revendication 4, dans lequel le dispositif sans fin de support d'image est un corps cylindrique ayant un matériau photosensible qui recouvre sa surface.

6. Dispositif de formation d'image selon la revendication 4 ou 5, dans lequel le dispositif d'écriture d'image comporte une matrice de diodes photoémissives qui émettent un faisceau lumineux.

7. Dispositif de formation d'image selon la revendication 4, 5 ou 6, dans lequel une unité de commande du dispositif sans fin de support d'image active le dispositif d'impression d'image, le dispositif de développement, le dispositif de report d'image, le dispositif de décharge et le dispositif de charge préalable avec une séquence prédéterminée lorsque le dispositif de détection détecte l'extrémité avant de la feuille, et désactive ces dispositifs avec une séquence prédéterminée lorsque le dispositif de détection détecte l'extrémité arrière de la feuille.

8. Procédé de formation d'une image sur une feuille à l'aide d'un dispositif de formation d'image comprenant un dispositif d'impression d'une image sur une feuille, un dispositif de transport de la feuille au dispositif d'impression le long d'un trajet de transport de la feuille, un dispositif de détection de l'extrémité avant de la feuille, placé sur le trajet de transport, un dispositif destiné à provoquer le début d'une opération d'impression sur la feuille lorsque l'extrémité avant de la feuille est détectée par le dispositif de détection, un dispositif de détection de l'extrémité arrière de la feuille, placé sur le trajet de transport, et un dispositif destiné à interrompre l'opération d'impression sur la feuille lorsque l'extrémité arrière de la feuille est détectée par le dispositif de détection, le dispositif d'impression comprenant un dispositif sans fin de transport d'image et un dispositif d'écriture d'image destiné à former une image latente à la surface du dispositif de support d'image, un dispositif de développement de l'image latente à sa surface, un dispositif de report de l'image développée à la surface sur une feuille, un dispositif de décharge destiné à éliminer la charge de la surface, et un dispositif de charge préalable de la surface à une tension statique prédéterminée, ces éléments étant placés dans cet ordre le long de la surface du dispositif sans fin de support d'image dans son sens de déplacement, dans lequel l'opération d'impression est commandée de manière que, lorsque le détecteur détecte l'extrémité avant de la feuille, l'opération d'impression commence depuis la position prévue sur la feuille par activation successive du dispositif de décharge, du dispositif de charge préalable, du dispositif de développement, du dispositif d'écriture d'image et du dispositif de report d'image, dans cet ordre, et à des intervalles prédéterminés respectivement et, lorsque le détecteur détecte l'extrémité arrière de la feuille, l'opération d'impression est interrompue à une position prévue prédéterminée sur la feuille et ne se poursuit pas après le passage de l'extrémité postérieure de la feuille dans le mécanisme d'impression, par désactivation successive du dispositif d'écriture d'image, du dispositif de report d'image, du dispositif de développement, du dispositif de charge préalable et du dispositif de décharge dans cet ordre et à des intervalles prédéterminés.
